(19) Europäisches Patentamt
European Patent Office
Office européen des brevets

(11) **EP 3 086 525 A1**

(12) **EUROPEAN PATENT APPLICATION**

(43) Date of publication:
**26.10.2016 Bulletin 2016/43**

(51) Int Cl.:
*H04L 27/38* (2006.01)     *H04L 25/03* (2006.01)
*H04B 7/155* (2006.01)

(21) Application number: **15305630.4**

(22) Date of filing: **24.04.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **ALCATEL LUCENT
92100 Boulogne-Billancourt (FR)**

(72) Inventors:
• **Schmalen, Laurent
70435 Stuttgart (DE)**
• **Aref, Vahid
70435 Stuttgart (DE)**
• **Buchali, Fred
70435 Stuttgart (DE)**

(74) Representative: **2SPL Patentanwälte PartG mbB
Postfach 15 17 23
80050 München (DE)**

(54) **APPARATUS AND METHOD FOR REGENERATING SYMBOLS OF A MODULATION SCHEME**

(57)     Embodiments relate to a concept for regenerating, from a received signal, a transmit symbol of a modulation scheme. At least one decision boundary (710-1; 710-2) is provided between a first constellation point (712-1) and at least an adjacent second constellation point (712-2; 712-3) of the modulation scheme. The decision boundary (710-1; 710-2) delimits a first decision area (722-1) corresponding to the first constellation point (712-1) from an adjacent second decision area (722-2; 722-3) corresponding to the second constellation point (712-2; 712-3). According to embodiments a first distance between the first constellation point (712-1) and the decision boundary (710-1; 710-2) differs from a second distance between the second constellation point (712-2; 712-3) and the decision boundary (710-1; 710-2). A first transmit symbol corresponding to the first constellation point (712-1) is selected, if the received signal falls within the first decision area (722-1). A second transmit symbol corresponding to the second constellation point (712-2; 712-3) is selected, if the received signal falls within the second decision area (722-2; 722-3).

Fig. 7a

## Description

Embodiments of the present disclosure generally relate to apparatuses and methods for regenerating symbols of a modulation scheme and, more particularly, to apparatuses and methods for implicit constellation shaping.

Background

In some transmission networks, e.g., wireless communications networks or optical networks, one or more intermediate nodes are provided which may receive a signal from a transmitter and impaired by a communication channel and at least partly recover the received signal before retransmission. Such intermediate nodes are also known as relay stations in wireless communications, or repeaters or regenerators in wired communications, such as optical communications for example.

Depending on the kind of signal, intermediate nodes may carry out various operations for signal recovery, e.g., demodulation, signal timing estimation or chromatic dispersion operation. Optionally, intermediate nodes may carry out Forward Error Correction (FEC) operations on the signal, such as decoding and encoding. Typically, data values of the received signal are encoded in a redundant way so as to allow the intermediate node to detect and/or correct a limited number of errors that may occur anywhere in the data values.

Various examples of intermediate nodes with FEC functionality are known. One example of an intermediate node fully decodes the received signal and re-encodes the decoded signal before retransmission. Such schemes may also be denoted as decode-and-forward schemes. However, a decode-and-forward intermediate node may consume a vast amount of power and be bulky, which leads to high operational expenditure (OPEX).

Therefore, in practice, after performing at least part of the operations for signal recovery, the signal is often merely re-modulated or quantized and decoding/re-encoding is not performed before retransmission of the quantized signal. Here, re-modulation or quantization means that a noisy received symbol is associated with a potential modulation symbol of an underlying constellation diagram. The potential modulation symbol may then be re-transmitted or forwarded to the next regenerator. In such schemes, which may also be denoted as quantize-and-forward schemes, the intermediate node merely performs hard decisions on the received encoded signal.

For demodulation or re-modulation/quantization purposes, usually Maximum Likelihood (ML) detection is utilized, which means that a constellation point that has the smallest Euclidean distance to the received noisy symbol is selected. ML detection includes selecting potential transmit symbols based on at least one decision boundary between a first constellation point and at least an adjacent second constellation point of a modulation scheme. The decision boundary delimits a first decision area corresponding to the first constellation point from an adjacent second decision area corresponding to the second constellation point. In ML detection, a distance between the first constellation point and the decision boundary equals a distance between the second constellation point and the decision boundary. However, there are scenarios where said ML detection can be further improved when employed in a quantize-and-forward regeneration scheme.

Hence there is a desire for improving the detection of received signals with respect to ML detection, in particular with regard to communication systems using a plurality of intermediate or regenerative network nodes.

Summary

Some simplifications may be made in the following summary, which is intended to highlight and introduce some aspects of the various example embodiments, but such simplifications are not intended to limit the scope of the present disclosure. Detailed descriptions of preferred exemplary embodiments adequate to allow those of ordinary skill in the art to make and use the inventive concepts will follow in later sections.

According to a first aspect of the present disclosure, it is provided a method for regenerating, from a received signal, a transmit symbol of a modulation scheme. The method includes selecting potential transmit symbols based on at least one decision boundary between a first constellation point and at least an adjacent second constellation point of the modulation scheme. The decision boundary delimits a first decision area corresponding to the first constellation point from an adjacent second decision area corresponding to the second constellation point. A first distance between the first constellation point and the decision boundary differs from a second distance between the second constellation point and the decision boundary. Thereby the first distance between the first constellation point and the decision boundary may be a minimum distance between the first constellation point and the decision boundary. Likewise the second distance between the second constellation point and the decision boundary may be a minimum distance between the second constellation point and the decision boundary. This may be due to fact that the decision boundary may not necessarily be equidistant to the constellation points or modulation symbols. A first transmit symbol corresponding to the first constellation point is selected, if the received signal falls within the first decision area. Otherwise a second transmit symbol corresponding to the second constellation point is selected, if the received signal sample falls within the second decision area.

Embodiments of the present disclosure may implicitly change the probability of occurrence of the different modulation symbols/constellation points after a regeneration stage. Therefore, the method may optionally further include weighting the selected transmit symbols by a scaling factor $\alpha$ which normalizes the selected transmit symbols to unit power or energy. In some embodiments, the scaling factor $\alpha$ may correspond to

$$\alpha = \frac{1}{\sqrt{\sum_{i=1}^{M} P(Y = \omega_i) \|\omega_i\|^2}},$$

wherein $M$ denotes a number of constellation points $\omega_i$, and $P(Y = \omega_i)$ denotes a probability that transmit symbol Y corresponding to constellation point $\omega_i$ has been selected.

In some embodiments the method may be performed by a regenerative network node between a first portion and a second portion of a communication link. That is, the received signal may be a signal impaired by the first portion of a communication link and the method may further include forwarding the selected transmit symbols to the second portion of the communication link.

Optionally, the method may further include extracting, at a regenerative network node between the first and the second portion of the communication link, destination information from the received signal. If the extracted destination information indicates that the received signal's destination is a further regenerative network node downstream to the regenerative network node, the selected transmit symbol may be forwarded to the further regenerative network node via a second portion of the communication link.

Embodiments of the present disclosure may be particularly useful if the received signal is received via a communication link which can be modeled as an AWGN channel, such as, for example, an optical communication channel.

Also, embodiments of the present disclosure may be particularly useful when the modulation scheme comprises more than two constellation points.

According to a further aspect of the present disclosure, it is provided an apparatus for regenerating, from a received signal, a transmit symbol of a modulation scheme. The apparatus comprises a signal regeneration unit configured to select potential transmit symbols based on at least one decision boundary between a first constellation point and at least an adjacent second constellation point of the modulation scheme. The decision boundary delimits a first decision area corresponding to the first constellation point from an adjacent second decision area corresponding to the second constellation point. A first distance between the first constellation point and the decision boundary differs from a second distance between the second constellation point and the decision boundary. Thereby the first distance between the first constellation point and the decision boundary may be a minimum distance between the first constellation point and the decision boundary. Likewise the second distance between the second constellation point and the decision boundary may be a minimum distance between the second constellation point and the decision boundary. This may be due to fact that the decision boundary may not necessarily be equidistant to the constellation points or modulation symbols. The signal regeneration unit is configured to select a first transmit symbol corresponding to the first constellation point, if the received signal falls within the first decision area, or to select a second transmit symbol corresponding to the second constellation point, if the received signal sample falls within the second decision area.

In some embodiments, the signal regeneration unit may be configured to set a run or a position of the at least one decision boundary such that first decision area corresponding to the first constellation point is larger than the second decision area corresponding to the second constellation point. That means that the shortest or minimum distance between the decision boundary and the first constellation point is larger than the shortest or minimum distance between the decision boundary and the adjacent second constellation point. Thereby the first constellation point may be closer to the origin of the complex plane than the second constellation point. That is, the first constellation point may be denoted as inner constellation point, while the second constellation point may be denoted as outer constellation point. In other embodiments, the first constellation point may be farther away from the origin of the complex plane than the second constellation point. In such cases, the first constellation point may be denoted as outer constellation point, while the second constellation point may be denoted as inner constellation point.

In some embodiments, the signal regeneration unit may further be configured to weight the selected transmit symbols by a scaling factor depending on a run or location of the at least one decision boundary in a constellation diagram of the modulation scheme.

In some embodiments, for example with regard to regenerative network nodes between first and second optical link portions, the received signal may be received via a first optical link portion. Here, the apparatus may further comprise an optical-electrical-optical conversion unit configured to convert an optical signal received from the first optical link portion to an electrical signal and to provide the electrical signal to the signal regeneration unit. Both the optical or the electrical signal may be regarded as forms of the received signal. The optical-electrical-optical conversion unit may also be configured to convert the selected transmit symbols to an optical output signal for the second optical link portion.

In some embodiments, the apparatus may further comprise a processing unit configured to extract destination information from the received signal received via a first portion of a communication link, e.g. an optical link. If the extracted destination information indicates that the received signal's destination is a further regenerative network node downstream to a regenerative network node associated with the apparatus, the selected transmit symbol may be forwarded to the further regenerative network node via a second portion of the communication link.

In some embodiments, the signal regeneration unit may further be configured to vary a run or location of the at least one decision boundary within a constellation diagram based on an employed modulation scheme. This may be useful for adaptive modulation schemes, for example.

Some embodiments may comprise analog and/or digital circuitry installed within the apparatuses for performing the respective methods or individual acts thereof. Digital control circuitry, e.g., a Digital Signal Processor (DSP), a Field-Programmable Gate Array (FPGA), an Application-Specific Integrated Circuit (ASIC), or a general purpose processor, needs to be programmed accordingly. Hence, yet further embodiments also provide a computer program having a program code for performing embodiments of the above method(s), when the computer program is executed on a programmable hardware device, e.g., a computer.

An idea underlying embodiments of present disclosure is to move the decision boundaries of a signal regeneration unit or quantizer which may be located in an intermediate regenerative network element. One effect of this is to deliberately introduce transmission errors in intermediate nodes. The appearance of these errors is however not symmetric, such that it is more probable to make a wrong decision from, for example, the outermost constellation points towards the innermost constellation points, such that at the output of an intermediate network element the regenerated symbols are not equiprobable anymore. An implicit shaping may then improve the overall performance over a last or final stage. This may allow an improvement of Signal-to-Noise Ratio (SNR) robustness without having to utilize any explicit apparatus for implementing constellation shaping.

Brief description of the Figures

Some embodiments of apparatuses and/or methods will be described in the following by way of example only, and with reference to the accompanying figures, in which

Fig. 1          illustrates a communication network with horseshoe architecture;

Fig. 2          illustrates an example of an apparatus for a regenerative network node between a first and a second link portion;

Fig. 3          shows required accumulated SNR curves to achieve an information rate (capacity) of 0.8 bit/channel use with BPSK modulation and different repeater/regeneration schemes;

Fig. 4a, b, c   show different models of a channel with regenerative network nodes;

Fig. 5          illustrates a constellation diagram with conventional centered decision boundaries;

Fig. 6          shows a flowchart of a method according to an example embodiment;

Fig. 7a         illustrates a constellation diagram with asymmetric decision boundaries;

Fig. 7b         shows a model of a channel with regenerative network nodes according to an embodiment;

Fig. 7c         illustrates a further constellation diagram with asymmetric decision boundaries;

Fig. 8a, b      show different models of a channel with regenerative network nodes to embodiments;

Fig. 8c         illustrates a 6-PAM constellation diagram with conventional centered decision boundaries;

Fig. 9a         shows the mutual information for a system with $N$-1 = 5 repeaters operating at an SNR per span of 12.18 dB;

Fig. 9b         shows a received constellation at the output of a system with 5 repeaters, 12.18 dB SNR per span and

$f1 = 0.0467$ and $f_2 = 0.0567$;

Fig. 9c      shows achievable SNR gains by implicit shaping for a 6-PAM system with spans that have the same SNR for various spectral efficiencies;

Fig. 9d      shows a received constellation at the output of a system with 5 repeaters, 12.18 dB SNR per span and $f1 = 1.0$ and $f_2 = -0.006$;

Fig. 10      illustrates a 6-PAM constellation diagram with off-centered decision boundaries; and

Fig. 11      shows an embodiment of an intermediate network element.

Description of Embodiments

Various example embodiments will now be described more fully with reference to the accompanying drawings in which some example embodiments are illustrated. In the figures, the thicknesses of lines, layers and/or regions may be exaggerated for clarity. Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the disclosure. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*e.g.*, "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

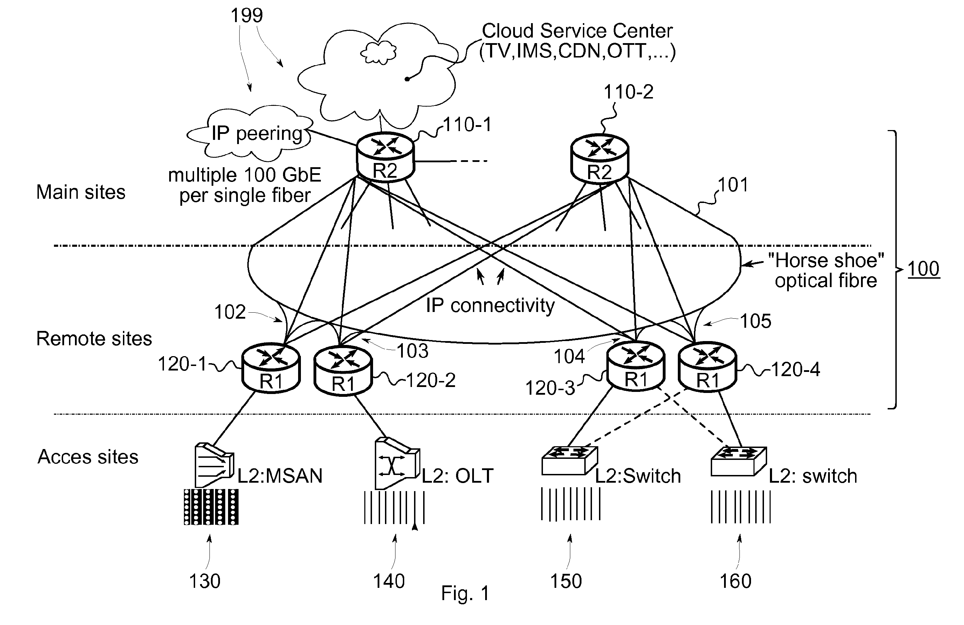

Fig. 1 illustrates an example of a communication network 100 to which embodiments of the present disclosure may be related. In some embodiments, communication network 100 may be an optical communication network. However, the skilled person will appreciate that embodiments of the present disclosure may also be relevant for other types of wired or wireless communication networks.

In the illustrated example, first network nodes 110-1, 110-2, so-called R2 (hop 2) routing devices connect the communication network 100 with another network portion 199. The network portion 199 may, e.g., comprise the internet, a service network or a data cloud of a service provider. The R2 routing devices 110-1, 110-2 may route data packets between the different networks 100 and 199. The R2 routing devices 110-1, 110-2 may, e.g., be located at a data center of a service provider.

In the illustrated example, the communication network 100 also comprises second network nodes 120-1, 120-2, 120-3, 120-4, ..., 120-*N*, so-called R1 (hop 1) routing devices. The R1 routing devices 120-1, 120-2, 120-3, 120-4 are arranged along a link 101, which interconnects the two R2 routing devices 110-1, 110-2. The link 101 may, e.g., comprise an optical link, a wire line or a wireless link. In the example of Fig. 1, the link 101 between the R2 routing devices 110-1, 110-2 is provided in a horseshoe architecture.

The R1 routing devices 120-1, 120-2, 120-3, 120-4 are coupled to the horseshoe-like link 101 via link connections 102, 103, 104, 105, respectively. The R1 routing devices 120-1, 120-2, 120-3, 120-4 act as routers for accessing respective associated access networks 130, 140, 150, 160. The access networks 130, 140, 150, 160 may be networks which connect subscribers to their immediate service provider. For example, the access networks 130, 140, 150, 160 may comprise a (local) Digital Subscriber Line (DSL) network, a mobile communications network, Gigabit Passive Optical Network (GPON) or an optical network.

The R1 routing devices 120-1, 120-2, 120-3, 120-4 may, e.g., be located remote from the R2 routing devices 110-1, 110-2. Hence, the R1 routing devices 120-1, 120-2, 120-3, 120-4 may serve has hop 1 routers to connect the access networks 130, 140, 150, 160 to network 199 via link 101 and the hop 2 R2 routing devices 110-1, 110-2.

The communication network 100 may be implemented using a bus architecture. That is, a network that transfers data between a plurality of nodes along a common transmission path may be implemented in order to increase an efficiency of the horse-shoe like network 100. If we consider an optical network with coherent technology, the R1 routing devices 120-1, 120-2, 120-3, 120-4 may, e.g., be implemented as intermediate regenerative network nodes that may partly recover the transmitted signal but that do not perform full forward error correction ("Decode-and-Forward") for complexity reasons. For example, R1 routing device 120-1 may receive a signal via optical link 101 from R2 routing device 110-1 and mitigate signal impairments caused by the optical link 101 between R2 routing device 110-1 and the R1 routing device 120-1. R1 routing device 120-1 may either drop the regenerated signal to the access network 130 or, via optical link 101, to another R1 routing device 120-2, 120-2, 120-4 or the other R2 routing device 110-2.

In one example, the intermediate regenerative network nodes 120-1, 120-2, 120-3, 120-4 may perform hard-decisions (quantization) on potentially transmitted signals before forwarding the quantized data. This hard-decision has advantages in terms of information theory and limits the complexity of the intermediate nodes. The resulting networking technology may be denoted as "Quantize-and-Forward" to emphasize the fact that a quantization is carried out.

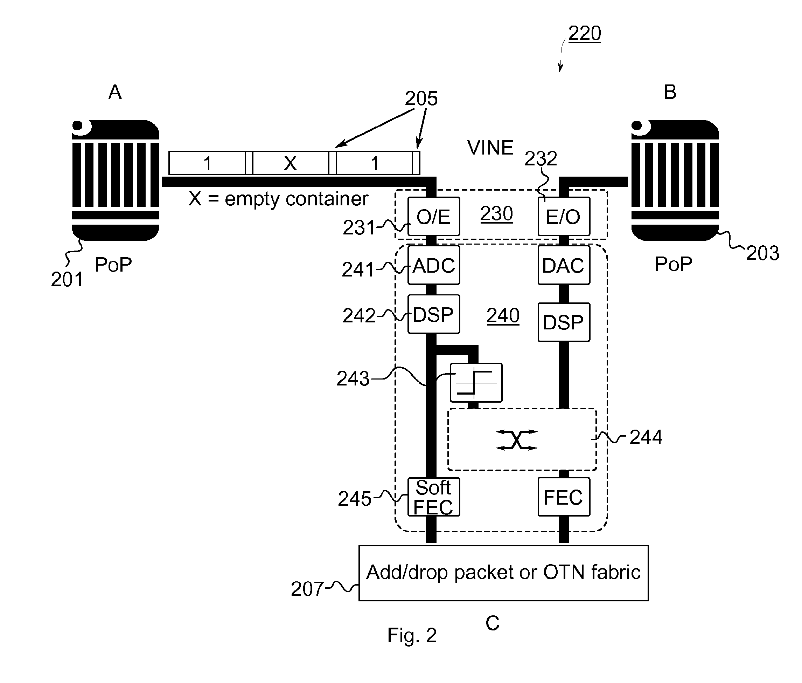

Fig. 2 illustrates an example implementation of a "Quantize-and-Forward" regenerative network node 220. The regenerative network node 220 may be used with or as the R1 routing devices 120 of Fig. 1, for example.

The intermediate regenerative network node 220 may be located within an optical transmission network between two Points of Presence (PoP) 201, 203. The PoPs 201, 203 may for example be routers for optical signals at locations A and B along link 101. An optical signal containing a header potion 205 may be transmitted from PoP 201 and may be received by intermediate regenerative node 220. Header portion 205 may include information related to a destination of a payload portion of the optical signal. For example, header portion 205 may define that certain data packets of the optical signal are to be transmitted to router 203 at location B or to another network element 207 at a location C different from locations A and B.

In the illustrated example, intermediate node 220 comprises an Optical - Electrical - Optical conversion unit (OEO) 230 and a processing unit 240.

The optical signal is received by the OEO 230 which comprises an Optical - Electrical converter (O/E) 231 for incoming signals and an Electrical - Optical converter (E/O) 232 for outgoing signals. O/E 231 may convert an input optical signal into an analog electrical signal and output the electrical signal to processing unit 240. E/O 232 may convert an input analog electrical signal from the processing unit 240 into an optical signal and output the optical signal to an optical transmission line, such as an optical fiber.

OEO 230 may convert the received optical signal into an inbound analog electrical signal, which may be input to an Analog - to - Digital converter (ADC) 241 of processing unit 240. ADC 241 may convert the inbound analog electrical signal into an inbound digital electrical signal, which may be input to a Digital Signal Processor (DSP) 242. DSP 242 may perform several signal processing operations on the inbound digital electrical signal. For example, DSP 242 may perform demodulation and/or operations for signal regeneration, e.g., timing estimation, dispersion compensation, equalization, skew correction, or signal amplification.

If an evaluation of header portion 205 reveals that data packets of the inbound digital signal are to be forwarded to PoP 203, soft values of the inbound digital electrical signal are directed from DSP 242 to a hard-decision signal regeneration unit 243, otherwise to decoder unit 244. The hard-decision signal regeneration unit 243 may e.g. carry out a hard-decision on the soft-information from DSP 242 based on Maximum Likelihood (ML) detection, which means that a constellation point that has the smallest Euclidean distance to the received noisy soft-value is selected. The symbols corresponding to the selected constellation points are then fed to switching unit 244 and switched to the transmit branch of intermediate node 220 and forwarded to the next hop. The person having benefit from the present disclosure will appreciate that the transmit branch of intermediate node 220 performs the respective inverse functions of the receive branch. A detailed description of the transmit branch will therefore be omitted for the sake of brevity.

If header 205 defines that certain data packets of the received signal are to be dropped to network element 207 associated with intermediate node 220, the soft-values from DSP 242 are fed to soft-decision FEC decoder unit 245. That is, only data values intended for a specific network element associated with intermediate node 220 may undergo selective soft-decoding. Other data values or packets are "quantized-and-forwarded".

In the intermediate node 220, information of the header 205 may be used to separate the data packets of the input optical signal for which FEC decoding is to be carried out from the data packets of the input optical signal which are to be "quantized-and-forwarded". FEC decoding is not carried out before switching in intermediate node 220, but rather the quantized output of the DSP 242 is relayed to the fiber of the next hop.

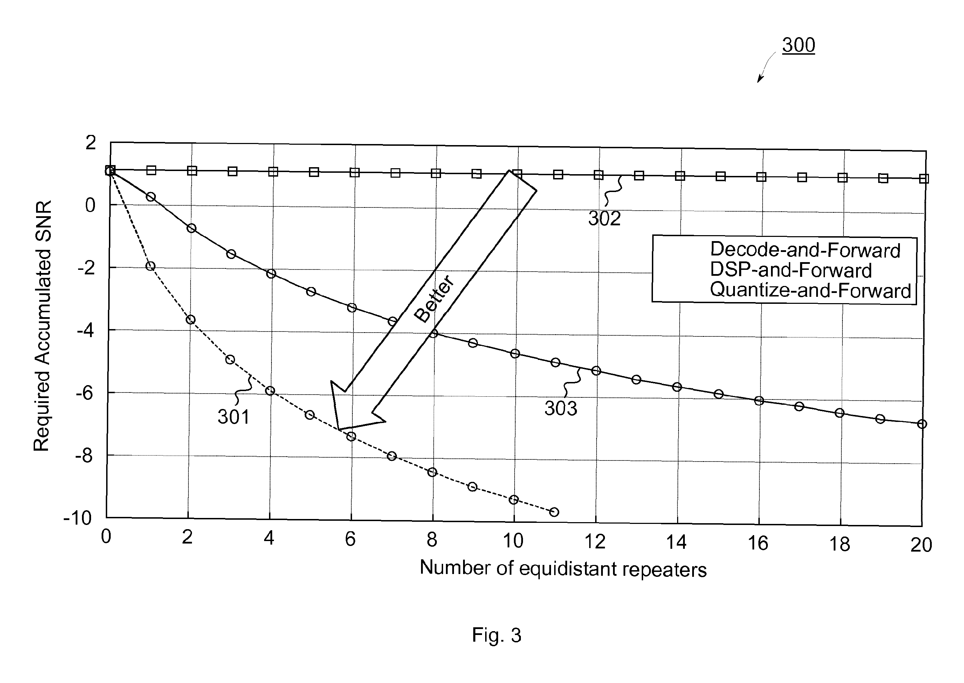

If we carry out an information theoretical analysis of different signal regeneration schemes, we see in **Fig. 3** that the simpler "Quantize-and-Forward" scheme outperforms the so-called "DSP-and-forward" scheme, where no quantization of the DSP output takes place. Instead, the unquantized soft-values from the DSP 242 are fed to switching fabric 244 and are then forwarded to PoP 203.

Fig. 3 illustrates an exemplary relation between an accumulated required Signal-to-Noise Ratio (SNR) of an optical signal and a number of intermediate nodes or repeaters in a signal path of the optical signal. The abscissa represents the number of intermediate nodes in the signal path of the optical signal. In the example shown in Fig. 3, the intermediate nodes (regenerators) are spaced at equal distances from each other. The ordinate represents the accumulated SNR along the transmission path of the optical signal which is required to achieve a certain information rate (capacity) in a transmission channel. For example, the information rate may be 0.8 bit/channel use in a transmission channel with Binary Phase-Shift Keying (BPSK) modulation. A low required SNR indicates high signal transmission performance.

Line 301 represents data obtained when employing so-called "Decode-and-Forward" intermediate nodes. Here all data packets are decoded, irrespective of their destination. Line 302 represents data obtained when employing "DSP-and-forward" intermediate nodes, and line 303 represents data obtained when employing "Quantize-and-Forward" at intermediate nodes, as has been explained with regard to Fig. 2.

As can be seen from Fig. 3, a transmission path having "decode-and-forward" intermediate nodes results in the lowest required SNR. However, the "Decode-and-Forward" scheme may be prohibitively complex to implement. When comparing lines 302 and 303, one can recognize that a transmission path using intermediate nodes according to the "Quantize-and-Forward"-principle can handle lower SNRs compared to transmission paths using intermediate nodes according to the "DSP-and-Forward"-principle. In other words, the simpler "Quantize-and-Forward" scheme outperforms the "DSP-and-Forward" scheme from an information theoretical perspective. This is why it is an ideal candidate as regenerative network element for wireline communication systems, particularly optical communication systems. However, in order to increase the transmission reach of such networks, some of the drawbacks of the "Quantize-and-Forward" scheme should be overcome.

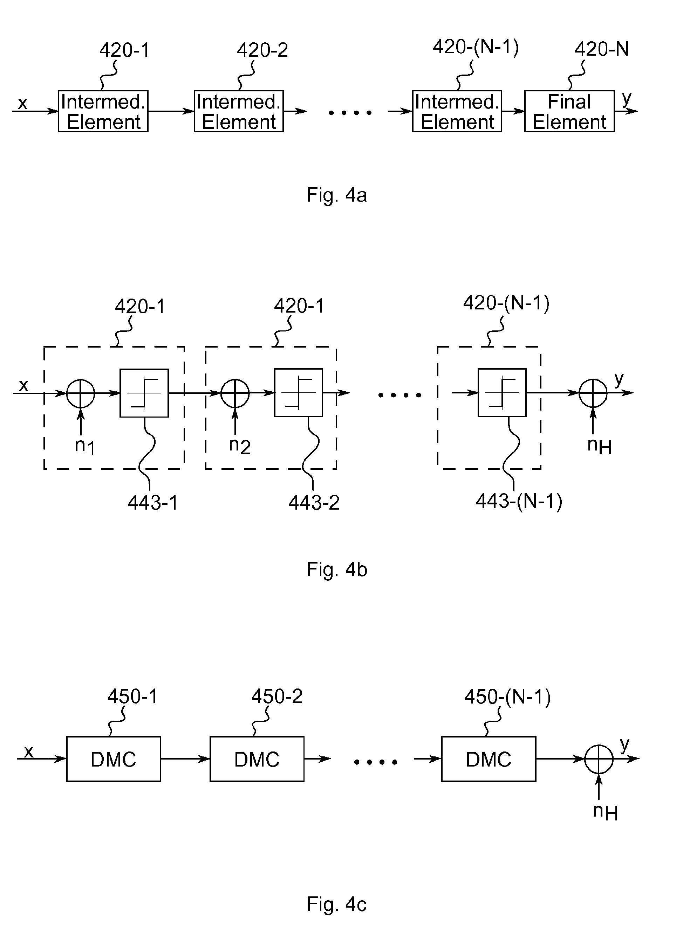

If we assume that a network comprises a total number of $N$ spans, we get the equivalent model of **Fig. 4a**, which contains $N$-1 intermediate elements or nodes 420-1 to 420-($N$-1) carrying out "Quantize-and-Forward" of data packets and one final element 420-$N$ making the final decoding of the previously "Quantized-and-Forwarded" packets. An equivalent channel model is sketched in **Fig. 4b**, where outputs of respective Additive White Gaussian Noise (AWGN) channel portions are fed to respective hard-decision signal regeneration units 443-1 to 443-($N$-1). Equivalently, the channel of Fig. 4b can be drawn as shown in **Fig. 4c**, where each intermediate AWGN channel portion with associated hard-decision signal regeneration unit 443 is modeled as a respective Discrete Memoryless Channel (DMC) 450.

In order to improve the performance of any communication scheme with higher order modulation formats, we may resort to the technique of constellation shaping. According to Shannon's famous equation, the capacity $C$ of a channel is given by

$$C = \max_{P(x)} I(X;Y),$$

where $I(X;Y)$ denotes the mutual information between channel input $X$ and channel output $Y$ and where the maximization is carried out over the space of possible input distributions $P(X)$. Note that the optimum is not necessarily achieved for a uniform input distribution, but rather for unequal input distributions, e.g., where the distance between constellation symbol and the origin (0, 0) of the complex plane approximately follows a Maxwell-Boltzmann distribution. The mutual information $I(X;Y)$ is given by

$$I(X;Y) = \sum_{x \in \Omega} P(x) \int_y p(y \mid x) \log_2 \left( \frac{p(y \mid x)}{p(y)} \right) = \sum_{x \in \Omega} P(x) \int_y p(y \mid x) \log_2 \left( \frac{p(y \mid x)}{\sum_{x' \in \Omega} p(y \mid x') P(x')} \right) \quad (1)$$

where the set $\Omega$ contains the constellation points, e.g., in the case of a BPSK modulation scheme, $\Omega = \{-1, +1\}$. Unfortunately, in practice it is not trivial to generate a nonuniform input distribution, which is why practical systems often use a uniform probability distribution, i.e., $p(x) = 1/|\Omega|$, especially in optical communications. Using the uniform distribution entails a loss in capacity, i.e., higher SNRs are required to achieve a certain spectral efficiency. On the other hand, using conventional constellation shaping leads to an inevitable higher implementation complexity.

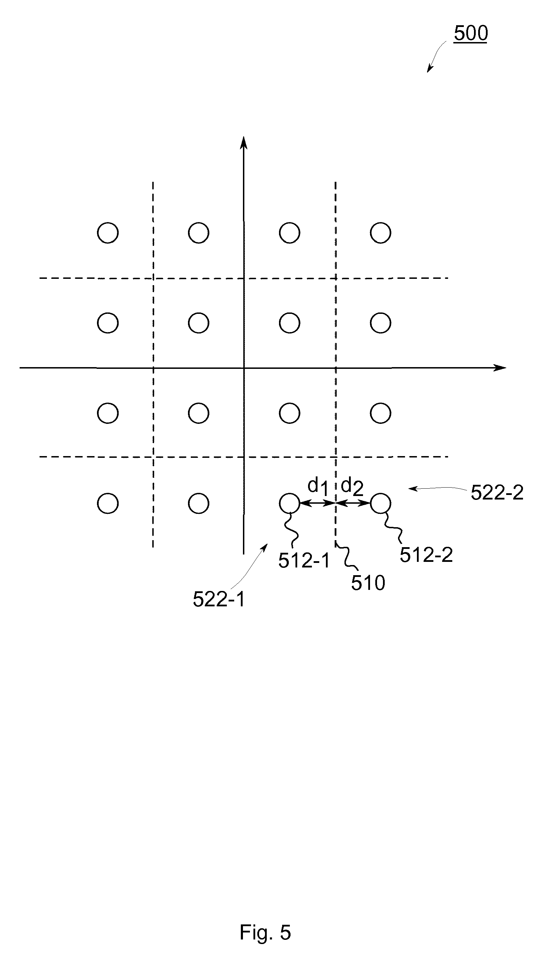

Further note that in the case of higher order constellations usually a Maximum Likelihood (ML) detection assuming Gaussian noise is utilized, which means that the constellation point that has the smallest Euclidean distance to the received point is selected. In the case of popular rectangular constellations, such as 16-QAM, for example, this corresponds to decision boundaries that are located exactly centered between the symbols or constellation points of the constellation diagram, as showcased in **Fig. 5.**

Fig. 5 shows an example of a 16-QAM constellation diagram. An exemplary decision boundary 510 is located between a first constellation point 512-1 and an adjacent second constellation point 512-2 of the illustrated modulation scheme. The exemplary decision boundary 510 delimits a first decision area 522-1 corresponding to the first constellation point 512-1 from an adjacent second decision area 522-2 corresponding to the second constellation point 512-2. In ML detection, a distance $d_1$ between the first constellation point 512-1 and the decision boundary 510 equals a distance $d_2$ between the second constellation point 512-2 and the decision boundary 510.

Some embodiments of the present disclosure suggest to move one or more decision boundaries of the hard-decision signal regeneration unit 243 in the intermediate regenerative network nodes 120, 220 to deliberately introduce transmission errors in subsequent intermediate regenerative network nodes along exemplary link 101. That is, one or more decision boundaries are no longer centered (i.e., in the middle) between two adjacent constellation points, contrary to the ML case of Fig. 5. Instead of centered decision boundaries, as in the ML case, we may now speak of asymmetric or off-centered decision boundaries separating adjacent constellation points.

Hence, according to some embodiments, intermediate regenerative network nodes 120, 220, or 420, or more particularly signal regenerator 243 thereof, may be configured to perform a method 600 for regenerating or quantizing, from a received signal, a potentially transmitted symbol of a modulation scheme. Some examples of modulation schemes are *M*-ary Amplitude Shift Keying (*M*-ASK) schemes, *M*-ary Pulse-Amplitude Modulation (PAM) schemes, *M*-ary Phase Shift Keying (*M*-PSK) schemes, or mixed schemes, such as M-QAM, for example. In some embodiments the modulation order *M* may be larger than 2. The person having benefit from the present disclosure will also appreciate that other embodiments may be employed in other forms of wired or wireless networks than the illustrative example of Fig. 1.

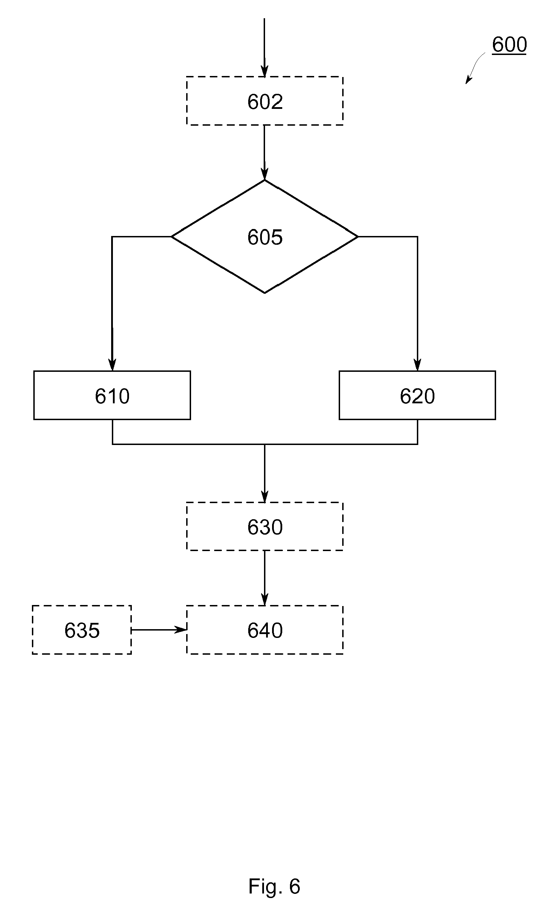

As shown in **Fig. 6,** method 600 includes comparing 605 the received signal against at least one off-centered or asymmetric decision boundary between a first constellation point and at least one adjacent second constellation point of the modulation scheme or its constellation diagram. The asymmetric decision boundary delimits a first decision area associated with the first constellation point from an adjacent second decision area associated with the second constellation point. Thereby, and in contrast to conventional ML detection, a first distance between the first constellation point and the asymmetric decision boundary differs from a second distance between the second constellation point and the asymmetric decision boundary, i.e., the asymmetric decision boundary is off-centered between the first and the second constellation point, leading to differently sized or differently probable decision areas. Based on the comparison 605, a first transmit symbol corresponding to the first constellation point is selected in act 610, if the received signal falls within the first decision area. If the received signal sample falls within the adjacent second decision area, a second transmit symbol corresponding to the second constellation point is selected in act 620.

In case of regenerative network nodes, method 600 may further include, prior to comparing 605 the received signal against at the least one off-centered or asymmetric decision boundary, receiving 602 the received signal via a communication link, which may be modeled as an AWGN channel in some embodiments. This may be the case if the communication link is an optical communication channel, such as an optical fiber link. The optical fiber link may interconnect a series of regenerative network nodes.

While the received signal may be a signal impaired by a first portion of a communication link the selected or quantized transmit symbols may be forwarded 640 to a second portion of the communication link. In the example of Fig. 1, the first portion of the communication link may e.g. be the link portion from R2 router 110-1 to R1 router 120-1, while the second portion of the communication link may be the link portion from R1 router 120-1 to any of the R1 routers 120-2, 120-3, or 120-4. Hence, embodiments of method 600 may be performed at or by R1 router 120-1, for example. For the purpose of forwarding packets along link 101 or dropping packets to associated access sites, method 600 may further include extracting 635, at a regenerative network node (e.g. R1 router 120-1) between the first and the second portion of the communication link, destination information from the received signal. For this purpose header information 205 may be used, for example. If the extracted destination information indicates that the received signal's destination is a further regenerative network node (e.g. one of R1 routers 120-2, 120-3, or 120-4) downstream to the regenerative network node, the selected transmit symbols may be forwarded 640 to the further regenerative network node via the second portion of the communication link.

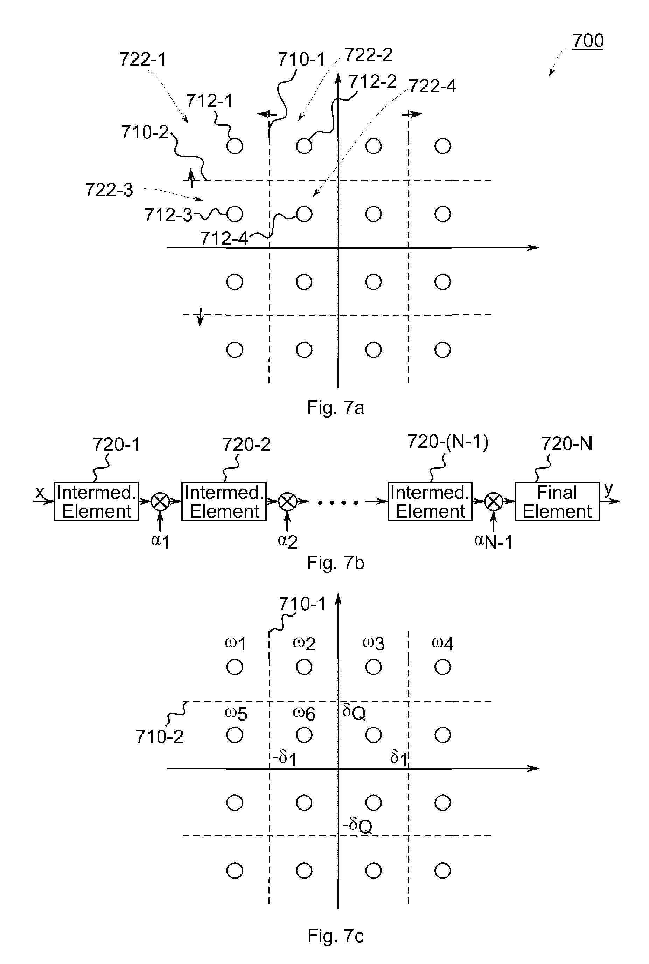

In some embodiments, a run of the at least one asymmetric decision boundary may be set such that the shortest or minimum distance between the decision boundary and the first constellation point is larger than the shortest or minimum distance between the decision boundary and the second constellation point. In particular, the first constellation point may be closer to the origin of the complex plane than the second constellation point, such that the first constellation point may be denoted as inner constellation point while the second constellation point may be denoted as outer constellation point. Such an example is shown in **Fig. 7a.**

In the constellation diagram of Fig. 7a, a first asymmetric decision boundary 710-1 is located between a first constellation point 712-1 and an adjacent second constellation point 712-2 of the illustrated exemplary 16-QAM scheme. A distance between the first constellation point 712-1 and the first asymmetric decision boundary 710-1 is smaller than a distance between the second constellation point 712-2 and the first asymmetric decision boundary 710-1. In a similar manner, the first asymmetric decision boundary 710-1 also separates a third constellation point 712-3 from an adjacent fourth constellation point 712-4. Hence, a distance between the third constellation point 712-3 and the first asymmetric decision boundary 710-1 is smaller than a distance between the fourth constellation point 712-4 and the first asymmetric decision boundary 710-1.

A second asymmetric decision boundary 710-2 separates the first constellation point 712-1 from adjacent third constellation point 712-3 and the second constellation point 712-2 from adjacent fourth constellation point 712-4. A distance between the first constellation point 712-1 and the second asymmetric decision boundary 710-2 is smaller than a distance between the third constellation point 712-3 and the second asymmetric decision boundary 710-2. Likewise, a distance between the second constellation point 712-2 and the second asymmetric decision boundary 710-2 is smaller than a distance between the fourth constellation point 712-4 and the second asymmetric decision boundary 710-2.

The two asymmetric decision boundaries 710-1 and 710-2 are perpendicular to each other and define respective decision areas 722-1, ..., 722-4 associated with the exemplary constellation points 712-1, ..., 712-4. In the example of Fig. 7a, the decision region has been moved towards the outside, which means that the probability to decode towards the innermost constellation points is increased with respect to the conventional ML decision rule. In this case, after the first intermediate regenerative network nodes 120-1 in the example of Fig.1 or 420-1 in the example of Fig. 4a, the probability distribution is not uniform anymore and when finally entering the final channel stage, which can be modeled as a pure AWGN channel, we experience an unequal input distribution which may allow to improve the transmission capacity on this final stage.

Note that by doing so, the power of the decided symbols is typically changed. For that reason, method 600 may further include an optional act of weighting 630 the selected (quantized) transmit symbols by a scaling factor $\alpha$ in order to normalize the selected potential transmit symbols to unit energy or power. Hence, scaling factors $\alpha_i$ may be inlcuded into each intermediate element i. This is schematically illustrated in **Fig. 7b.**

Fig. 7b illustrates a series of interconnected intermediate regenerative network nodes 720-1, 720-2, ..., 720-*N*. Regenerated and forwarded output signals of intermediate regenerative network nodes 720-1, 720-2, ..., 720-(*N*-1) are weighted by respective power scaling factors $\alpha 1$, ..., $\alpha_{N-1}$. Note that the scaling factor(s) may depend on a course of the at least one asymmetric decision boundary in the constellation diagram of the modulation scheme.

An equivalent channel model can be assumed to be an AWGN channel, which models quite well the exemplary coherent-fiber optic transmission system 100 or its link 101. We may assume that the total SNR of the complete transmission link 101 amounts to $\frac{E_s}{N_0} = \frac{1}{2\sigma_n^2}$ and that we may subdivide the example transmission link 101 into $N$ hops that are equidistantly distributed. This equidistant spacing is often present in submarine optical transmission links, for example. In that case, we may assume that each hop is affected by Gaussian noise of variance $\sigma_{h,i}^2 = \frac{\sigma_n^2}{N}$, and $\sigma_n^2$ denotes the total cumulated noise variance.

The symbol regeneration by hard decision after each additive noise transforms each hop into an equivalent Discrete Memoryless Channel (DMC). For simplicity, we may start with assuming that only AWGN noise is present and that a genie-aided Digital Signal Processor (DSP) 242 in a regenerative network node is able to perfectly remove all other channel impairments present in the received input signal. If we assume transmission with channel symbols x $\in$ $\Omega = (\omega_1; \omega_2, ...., \omega_M$}, each intermediate quantizer (hard decision) 243 transforms that part of the channel segment to an equivalent DMC with error transition matrix

$$\mathbf{W} = \begin{pmatrix} P(Y_1 \mid X = \omega_1) & \cdots & P(Y_1 \mid X = \omega_M) \\ \vdots & \ddots & \vdots \\ P(Y_M \mid X = \omega_1) & \cdots & P(Y_M \mid X = \omega_M) \end{pmatrix},$$

where P($Y_i$ |X = $\omega_j$) denotes the probability that the symbol $Y_i$ is decided provided that $\omega_j$ has been transmitted. This probability can be computed based on the knowledge of the channel model (e.g., AWGN) and the decision regions 722. For the exemplary case of the 16-QAM introduced above, let the symbols be associated in the order given below and let the dashed decision boundaries 710 be at $\pm\delta_I$ and $\pm\delta_Q$, see **Fig. 7c.**

For example (AWGN channel) we then have

$$P(Y_1 \mid X = \omega_1) = \int\limits_{-\infty}^{-\delta_I} \int\limits_{-\infty}^{-\delta_Q} \frac{1}{2\pi\sigma_{h,i}^2} \exp\left( -\frac{(\kappa - \Re\{\omega_1\})^2 + (\tau - \Im\{\omega_1\})^2}{2\sigma_{h,i}^2} \right) d\tau d\kappa$$

and

$$P(Y_6 \mid X = \omega_5) = \int\limits_{-\delta_I}^{0} \int\limits_{-\delta_Q}^{0} \frac{1}{2\pi\sigma_{h,i}^2} \exp\left( -\frac{(\kappa - \Re\{\omega_5\})^2 + (\tau - \Im\{\omega_5\})^2}{2\sigma_{h,i}^2} \right) d\tau d\kappa \ .$$

where $\Im(\cdot)$ and $\Re(\cdot)$ provide the imaginary and real part of a complex number. This integral can be conveniently computed using for instance the complementary error function, e.g.,

$$P(Y_1 \mid X = \omega_1) = \left( 1 - \frac{1}{2}\mathrm{erfc}\left( \frac{-\delta_I - \Re\{\omega_1\}}{\sqrt{2}\sigma_{h,i}} \right) \right)\left( 1 - \frac{1}{2}\mathrm{erfc}\left( \frac{-\delta_Q - \Im\{\omega_1\}}{\sqrt{2}\sigma_{h,i}} \right) \right)$$

where erfc denotes the complementary error function.

If we assume that the probabilities of occurrence of the input symbols to the channel are grouped in a vector $\mathbf{p_x}$, with

$$\mathbf{p}_x = \left( P(X = \omega_1) \quad P(X = \omega_2) \quad \cdots \quad P(X = \omega_M) \right)^T$$

then the probability of decoding to $Y_i$ is grouped in the vector

$$\mathbf{p}_y = \left( P(Y = \omega_1) \quad P(Y = \omega_2) \quad \cdots \quad P(Y = \omega_M) \right)^T$$

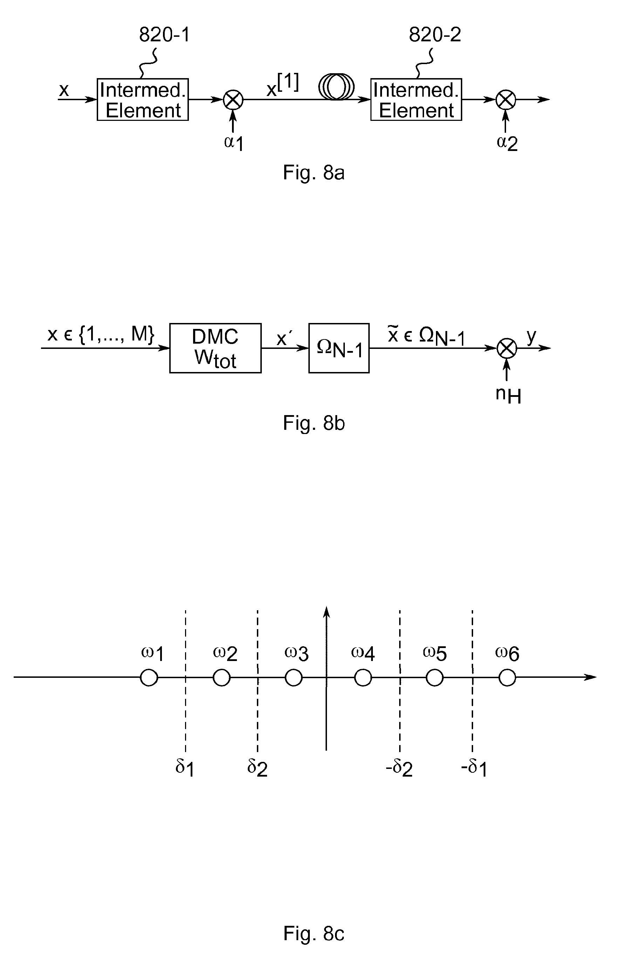

which is given by $\mathbf{p_y} = \mathbf{W}\mathbf{p_x}$. If $\mathbf{p_y}$ is not uniformly distributed, i.e., if not all entries of $\mathbf{p_y}$ amount to $1/M$, then, after remodulating the decided input, we make a power adjustment (act 630), to ensure that the constellation is properly normalized. This may be ensured by the above factors $\alpha_i$ after (or inside) each intermediate regeneration act, which ensures that $E\{\|X^{[1]}\|^2\} = 1$, where $x^{[1]}$ denotes the signal at the output of normalization stage. This is shown in Fig. 8a for the first intermediate regenerative network node 820-1.

We have

$$E\left\{\left\| X^{[1]} \right\|^2\right\} = \sum_{i=1}^{M} P(Y = \omega_i)\alpha_1^2 \left\| \omega_i \right\|^2 \overset{!}{=} 1$$

which we can solve for $\alpha_1$:

$$\alpha_1 = \frac{1}{\sqrt{\sum\limits_{i=1}^{M} P(Y = \omega_i)\left\| \omega_i \right\|^2}} = \frac{1}{\sqrt{\sum\limits_{i=1}^{M}\sum\limits_{j=1}^{M} P(Y = \omega_i \mid P(X = \omega_j)P(X = \omega_j)\left\| \omega_i \right\|^2}}$$

Hence, in some embodiments, the scaling factor may correspond to

$$\alpha = \frac{1}{\sqrt{\sum_{i=1}^{M} P(Y = \omega_i)\|\omega_i\|^2}} \ ,$$

wherein $M$ denotes a number of constellation points $\omega_i$, and $P(Y = \omega_i)$ denotes a probability that transmit symbol $Y$ corresponding to constellation *point* $\omega_i$ has been selected.

Note that the normalization changes the effective constellation that is used. While in the first intermediate regenerative network node 820-1, the effective constellation is the original constellation $\Omega_1 = \Omega = \{\omega_1,...,\omega_M\}$, the constellation in the second intermediate regenerative network node 820-2 is given by $\Omega_2 = \alpha_1\Omega = \{\alpha_1\omega_i : i = 1,...,M\}$, and in

generalby $\Omega_k = \alpha_1\alpha_2\cdots\alpha_k\Omega = \{\omega_i \prod_{j=1}^{k-1} \alpha_j : i = 1,...,M\}$ .

Since the effective constellation that is used changes in each intermediate regenerative network node, the computation of the error transition **W**-matrix may be repeated for each intermediate node, as the boundaries of the integration necessary in computing $P(Y_j | X)$ depend on the constellation. Finally, all intermediate steps corresponding to all intermediate regenerative network nodes 720-1, 720-2, ..., 720-(N-1) can be modeled as one single compound DMC whose transition matrix is given by

$$\mathbf{W}_{tot} = \mathbf{W}_{N-1}\mathbf{W}_{N-2}\cdots\mathbf{W}_1 \ .$$

In that case, we can model the whole transmission scheme using the equivalent channel model of **Fig. 8b**.

We can use the channel model of Fig. 8b to compute the achievable rate, i.e., the mutual information $I(X;Y)$ provided that x is uniformly distributed, as it is the case in a transmission system without shaping. The non-symmetric matrix $\mathbf{W}_{tot}$ will then lead to an x' which is not uniformly distributed anymore, such that the last channel part (the AWGN portion) has an unequal input distribution which can maximize this capacity.

We get by marginalization

$$p(y | X = \omega_j) = \sum_{i=1}^{M} p(y, \widetilde{X} = \omega_i | X = \omega_j) = \sum_{i=1}^{M} \underbrace{P(\widetilde{X} = \omega_i | X = \omega_j)}_{W_{tot,i,j}} p(y | \widetilde{X} = \omega_i) \qquad (2)$$

which can be computed using the entries of the matrix $\mathbf{W}_{tot}$ and the Gaussian probability density function (pdf). We can then insert equation (2) into above equation (1) and compute the mutual information provided that P(X) = 1/*M.*

We illustrate the achievable gains of such a system by means of a small example. We consider an examplary 6-PAM constellation (which can be extended to a 36-QAM, closely approximating the widely used 32-QAM) with constellation points $\omega_1$ to $\omega_6$. We employ a symmetric decision setup shown in **Fig. 8c.** The decision is based on two decision thresholds

$$\delta_1 = \frac{1}{2}(\omega_1 + \omega_2)(1 + f_1)$$

$$\delta_2 = \frac{1}{2}(\omega_2 + \omega_3)(1 + f_2)$$

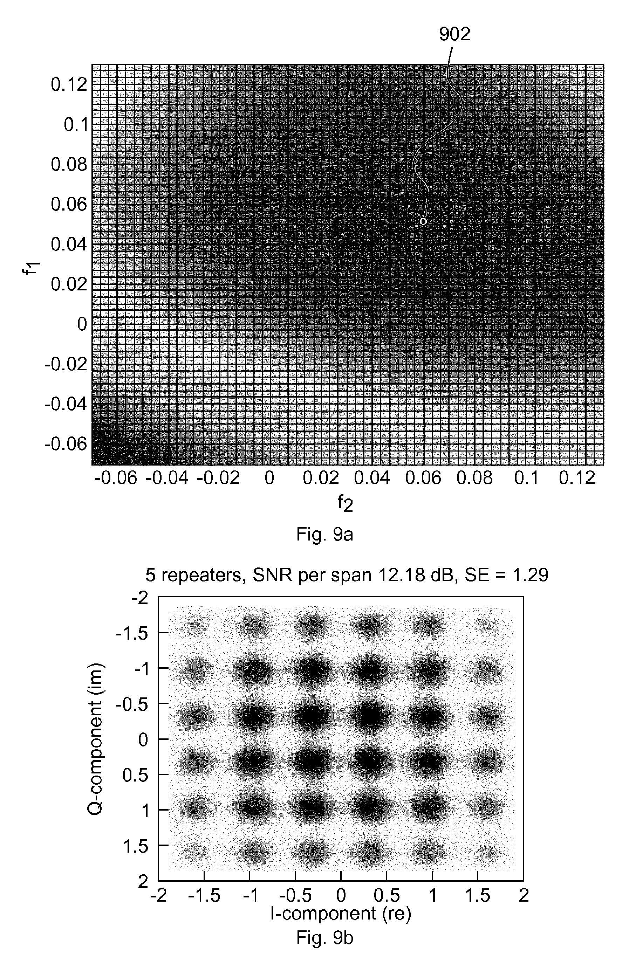

For $f_1$=0 and $f_2$=0, we obtain the conventional ML decoder. What we now intend to do is optimize $f_1$ and $f_2$ in order to have a maximum mutual information I(X;Y) provided that $X$ is uniformly distributed. If we assume for instance that we have a system with $N$-1 = 5 repeaters (i.e., $N$=6) spans, where each span operates at an SNR of 12.18 dB which allows us in the conventional case ($f_1 = f_2 = 0$) to operate a system with 100% coding overhead, i.e., with spectral efficiency $\log_2(6)/2$. The resulting mutual information as a function of $f_1$ and $f_2$ is shown in **Fig. 9a** where the different colors represent different mutual informations. We can see that a maximum 902 is obtained for $f_1$ = 0.0467 and $f_2$ = 0.0567, which is obviously larger than what we have obtained for $f_1 = f_2$ = 0. If we compute the SNR gain that can be achieved with this setup, we see that a gain of approximately 0.1 dB can be obtained. If we use this setup in a 36-QAM scenario, the received constellation of Y (after AWGN) is shown in **Fig. 9b.** We can clearly see the shaping effect, i.e., the points with small Euclidean distance to the origin occur more often than the points with larger Euclidean distance from the origin.

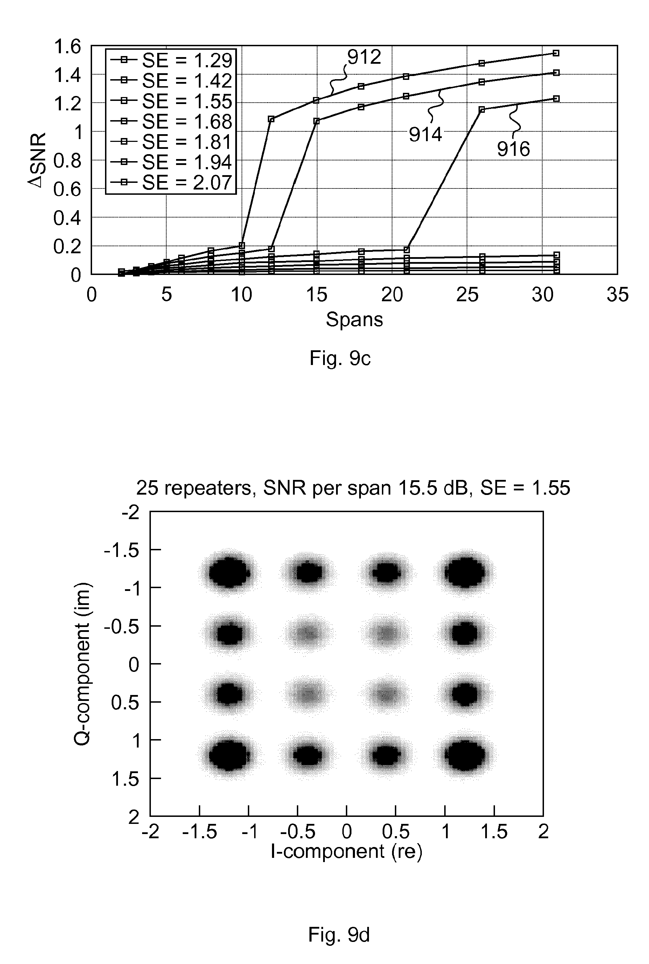

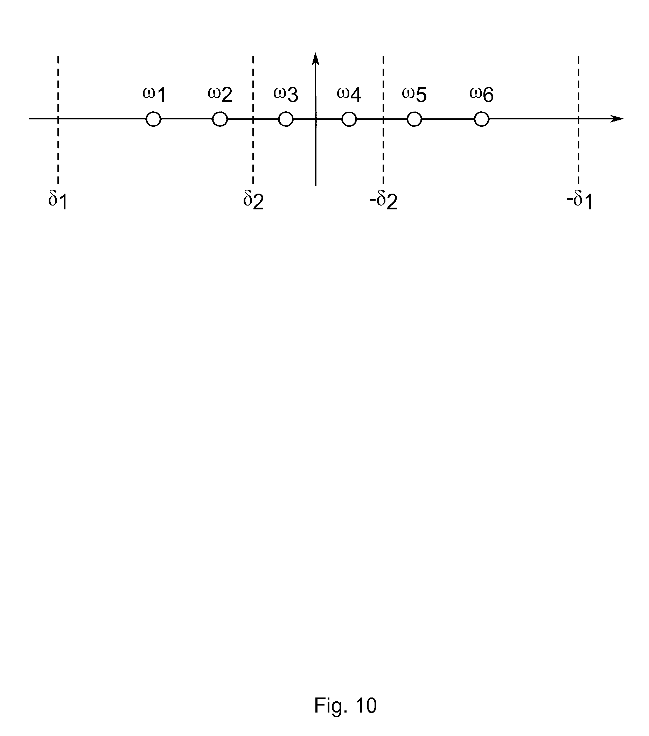

**Fig. 9c** shows the achievable SNR gains for different values of $N$ (number of spans) and targeted spectral efficiencies (bit/channel use). For low spectral efficiencies (corresponding to code rates between 0.5 and 0.6), we can see that there seems to be a "phase transition" effect, see curves 912, 914, 916. At a certain number of spans, the performance improvement grows towards 1 dB. If we take a look at the case 916 with a code rate of 0.6 (SE = 1.55) with $N$ = 25 spans, it turns out that a good selection of $f_1$ and $f_2$ is $f_1$ = 1 and $f_2$ = -0.006. This leads to the situation shown in the exemplary constellation diagram of **Fig. 10**, where the decision threshold is no longer between the contellation symbols, but both outermost constellation symbols are decided towards the symbol $\omega_2$ (or $\omega_5$), effectively reducing the "diameter" of the constellation, such that the renormalization (scaling by $\alpha$) effectively increases the distance between constellation points, thus increasing the effective SNR. In this case, i.e., for $N$ = 25 spans and for an SNR of 15.54 dB per span, the received constellations is displayed in **Fig. 9d.** We can see that the constellation approaches a QPSK constellation and that the AWGN channel almost introduces no errors. The errors are almost exclusively introduced by the DMC and are then recovered by the code at the receiver.

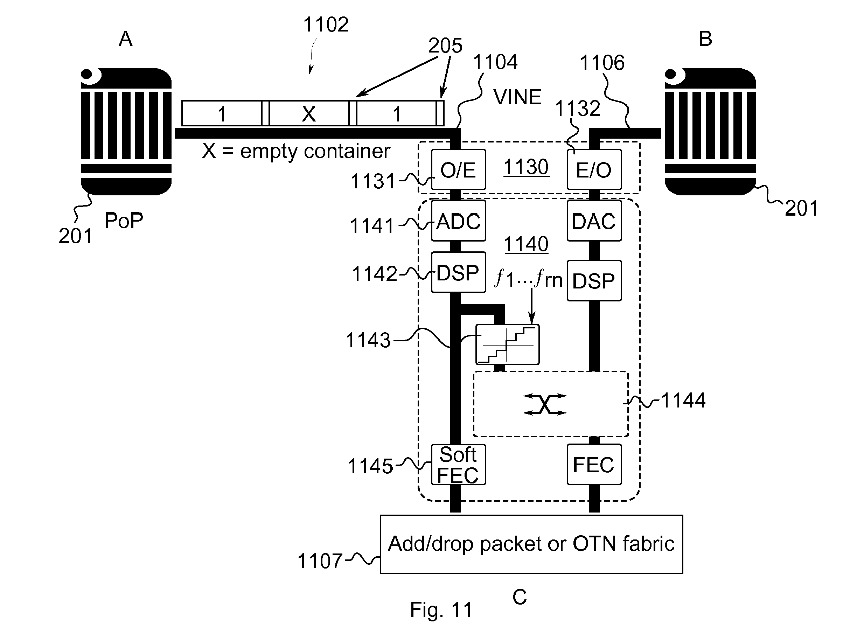

**Fig. 11** shows a block diagram of an example of a proposed network element 1100. Network element 1100, which is similar to network element 200 described with reference to Fig. 2, may be regarded as or may include an apparatus for regenerating, from a received signal 1102, a transmit symbol of a modulation scheme.

Apparatus 1100 differs from apparatus 200 mainly with regard to signal regeneration unit 1143. The signal regeneration unit 1143 of apparatus 1110 works according to embodiments of the present disclosure. That is, signal regeneration unit 1143 is configured to select potential transmit symbols corresponding to constellation points of a constellation diagram based on at least one off-centered decision boundary. The at least one off-centered decision boundary runs between a first constellation point and at least an adjacent second constellation point of the modulation scheme. The off-centered decision boundary delimits a first decision area corresponding to the first constellation point from an adjacent second decision area corresponding to the second constellation point. Thereby a first distance between the first constellation point and the off-centered decision boundary differs from a second distance between the second constellation point and the off-centered decision boundary. The signal regeneration unit 1143 is configured to select a first transmit symbol corresponding to the first constellation point, if the received signal falls within the first decision area, or to select a second transmit symbol corresponding to the second constellation point, if the received signal sample falls within the second decision area.

The apparatus 1100 and or the signal regeneration unit 1143 may comprise analog and/or digital circuitry, e.g., a DSP, an FPGA, an ASIC, for performing method 600 or individual acts thereof.

As has been explained before, a course of the at least one asymmetric decision boundary may be set by the signal regeneration unit 1143 such that a first decision area corresponding to a first constellation point is larger than a second decision area corresponding to a second constellation point adjacent to the first constellation point. In some embodiments (e.g., Fig. 9b), the first constellation point may be closer to the origin of the complex plane than the second constellation point. In other embodiments (e.g., Fig. 9d), the first constellation point may be farther away from the origin of the complex plane than the second constellation point.

As illustrated in the example of Fig. 11, the received signal 1102 may be received via a first optical link portion 1104. Here, the apparatus 1100 further comprises an optical-electrical-optical conversion unit 1130 configured to convert, by an optical-to-electrical converter 1131, an optical signal received from the first optical link portion 1104 to an electrical signal and to provide the electrical signal to the downstream signal regeneration unit 1143. The optical-electrical-optical conversion unit 1130 is also configured to convert, by an electrical-to-optical converter 1132, the selected or quantized transmit symbols to an optical output signal for a second optical link portion 1106 towards a downstream located further network node.

A digital processing unit (DSP) 1142 may be configured to extract destination information from the received signal received via the first optical link portion 1104. For example, header information 205 may be extracted and evaluated for this purpose. If the extracted destination information indicates that the received signal's destination is a further regenerative network node downstream to the regenerative network node associated with the apparatus 1100, the selected transmit symbols at the output of signal regeneration unit 1143 may be forwarded to the further regenerative network node via switching fabric 1144 and the second optical link portion 1106. After DSP 1142, when the constellation is recovered and if a received packet has been decided to be forwarded (by means of, e.g.., a header), then a decision on the constellation points is made and the decision thresholds may be configured using the factors $f_1, ... f_m$, where $m$ = $(M-2)/2$ in the case of a PAM constellation or $m = (\sqrt{M} - 2)/2$ in the case of a 2-dimensional QAM constellation. These factors can be either provided by the network management tool, by an initial network planning tool, or can be estimated during the operation using the statistics of the constellation. In some embodiments, the signal regeneration unit 1143 may be configured to vary a course or position of the at least one decision boundary based on an employed modulation scheme.

To summarize, embodiments may be used for Quantize-And-Forward Networks with Implicit Constellation Shaping and thereby improve the SNR performance of optical transport systems with intermediate regenerative network elements while keeping the Very-Large-Scale Integration (VLSI) complexity low by implementing implicit constellation shaping. Embodiments may facilitate VLSI implementation and leads to SNR improvements in the order of up to 1.4 dB by optimizing the decision thresholds in intermediate elements to realize shaping on the final element, i.e., by maximizing the mutual information.

The description and drawings merely illustrate the principles of the disclosure. It will thus be appreciated that those skilled in the art will be able to devise various arrangements that, although not explicitly described or shown herein, embody the principles of the disclosure and are included within its spirit and scope. Furthermore, all examples recited herein are principally intended expressly to be only for pedagogical purposes to aid the reader in understanding the principles of the disclosure and the concepts contributed by the inventor(s) to furthering the art, and are to be construed as being without limitation to such specifically recited examples and conditions. Moreover, all statements herein reciting principles, aspects, and embodiments of the disclosure, as well as specific examples thereof, are intended to encompass equivalents thereof.

Functional blocks denoted as "unit" (performing a certain function) shall be understood as functional blocks comprising circuitry that is adapted for performing a certain function, respectively. Hence, a "unit" may as well be understood as a "unit being adapted or suited for s.th.". Moreover, any entity described herein as "unit", may correspond to or be implemented as "one or more modules", "one or more devices", "one or more units", etc. A unit being adapted for performing a certain function does, hence, not imply that such means necessarily is performing said function (at a given time instant).

Functions of various elements shown in the figures may be provided through the use of dedicated hardware as well as hardware capable of executing software in association with appropriate software. When provided by a processor, for example, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple acts or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

**Claims**

1. A method (600) for regenerating, from a received signal, a transmit symbol of a modulation scheme, the method comprising:

   based on at least one decision boundary (710-1; 710-2) between a first constellation point (712-1) and at least an adjacent second constellation point (712-2; 712-3) of the modulation scheme, the decision boundary (710-1; 710-2) delimiting a first decision area (722-1) corresponding to the first constellation point from an adjacent second decision area (722-2; 722-3) corresponding to the second constellation point, wherein a first distance between the first constellation point (712-1) and the decision boundary (710-1; 710-2) differs from a second distance between the second constellation point (712-2; 712-3) and the decision boundary,
selecting (610) a first transmit symbol corresponding to the first constellation point (712-1), if the received signal falls within the first decision area (722-1); or
selecting (620) a second transmit symbol corresponding to the second constellation point (712-2; 712-3), if the received signal falls within the second decision area (722-2; 722-3).

2. The method (600) of claim 1, further comprising:

weighting (630) the selected transmit symbols by a scaling factor $\alpha$ normalizing the selected transmit symbols to unit power.

3. The method (600) of claim 2, wherein the scaling factor $\alpha$ corresponds to

$$\alpha = \frac{1}{\sqrt{\sum_{i=1}^{M} P(Y = \omega_i)\|\omega_i\|^2}} \, ,$$

wherein $M$ denotes a number of constellation *points* $\omega_i$, and $P(Y = \omega_i)$ denotes a probability that transmit symbol Ycorresponding to constellation point $\omega_i$ has been selected.

4. The method (600) of claim 1, wherein the received signal is a signal impaired by a first portion of a communication link, the method further comprising:

forwarding (640) the selected transmit symbols to a second portion of the communication link.

5. The method (600) of claim 4, further comprising:

extracting (635), at a regenerative network node between the first and the second portion of the communication link, destination information from the received signal; and
if the extracted destination information indicates that the received signal's destination is a further regenerative network node downstream to the regenerative network node,
forwarding (640) the selected transmit symbol to the further regenerative network node via a second portion of the communication link.

6. The method (600) of claim 1, further comprising:

receiving (602) the received signal via a communication link modeled as an AWGN channel.

7. The method (600) of claim 1, wherein the communication link comprises an optical channel.

8. The method (600) of claim 1, wherein the modulation scheme comprises more than two constellation points.

9. A computer program having a program code for performing the method of claim 1, when the computer program is executed on a programmable hardware device.

10. An apparatus (1100) for regenerating, from a received signal (1102), a transmit symbol of a modulation scheme, the apparatus comprising:

a signal regeneration unit (1143) configured to select,
based on at least one decision boundary (710-1; 710-2) between a first constellation point (712-1) and at least an adjacent second constellation point (712-2; 712-3) of the modulation scheme, the decision boundary (710-1; 710-2) delimiting a first decision area (722-1) corresponding to the first constellation point from an adjacent second decision (722-2; 722-3) area corresponding to the second constellation point, wherein a first distance between the first constellation point (712-1) and the decision boundary (710-1; 710-2) differs from a second distance between the second constellation point (712-2; 712-3) and the decision boundary (710-1; 710-2),

a first transmit symbol corresponding to the first constellation point (712-1), if the received signal falls within the first decision area (722-1), or

a second transmit symbol corresponding to the second constellation point (712-2; 712-3), if the received signal falls within the second decision area (722-2; 722-3).

11. The apparatus (1100) of claim 10, wherein the signal regeneration unit (1143) is configured to set a course of the at least one decision boundary (710-1; 710-2) such that a shortest distance between the decision boundary and the first constellation point is larger than a shortest distance between the decision boundary and the second constellation point, wherein the first constellation point (712-1) is closer to the origin of the complex plane than the second constellation point (712-2; 712-3).

12. The apparatus (1100) of claim 10, wherein the signal regeneration unit (1143) is further configured to weight the selected transmit symbols by a scaling factor, wherein the scaling factor depends on a run of the at least one decision boundary (710-1; 710-2) in a constellation diagram of the modulation scheme.

13. The apparatus (1100) of claim 10, wherein the received signal (1102) is received via a first optical link portion (1104), the apparatus further comprising:

an optical-electrical-optical conversion unit (1130) configured to
convert an optical signal received from the first optical link portion to an electrical signal and to provide the electrical signal to the signal regeneration unit (1143), and
convert the selected transmit symbols to an optical output signal for a second optical link portion (1106).

14. The apparatus (1100) of claim 10, further comprising:

a processing unit (1142) configured to
extract destination information from the received signal (1102) received via a first portion (1104) of a communication link; and
if the extracted destination information indicates that the received signal's destination is a further regenerative network node downstream to a regenerative network node associated with the apparatus (1100),
forward the selected transmit symbol to the further regenerative network node via a second portion (1106) of the communication link.

15. The apparatus (1100) of claim 10, wherein the signal regeneration unit (1143) is further configured to vary a course of the at least one decision boundary (710-1; 710-2) based on an employed modulation scheme.

199

Cloud Service Center
(TV,IMS,CDN,OTT,...)

110-2

110-1

IP peering

Main sites

multiple 100 GbE
per single fiber

R2

R2

101

"Horse shoe"
optical fibre

100

Remote sites

102

IP connectivity

105

103

104

120-1

R1

R1

R1

R1

120-4

120-2

120-3

Acces sites

L2:MSAN

L2: OLT

L2:Switch

L2: switch

130

140

150

160

Fig. 1

EP 3 086 525 A1

Fig. 2

Fig. 3

420-1        420-2                    420-(N-1)      420-N

x → | Intermed. Element | → | Intermed. Element | → · · · · → | Intermed. Element | → | Final Element | → y

Fig. 4a

420-1                    420-1                    420-(N-1)

x → ⊕ → ⎍ → ⊕ → ⎍ → · · · · → ⎍ → ⊕ → y

$n_1$        $n_2$                    $n_H$

443-1        443-2                    443-(N-1)

Fig. 4b

450-1        450-2                    450-(N-1)

x → | DMC | → | DMC | → · · · · → | DMC | → ⊕ → y

$n_H$

Fig. 4c

Fig. 5

Fig. 6

Fig. 7a

Fig. 7b

Fig. 7c

Fig. 8a

Fig. 8b

Fig. 8c

902

Fig. 9a

5 repeaters, SNR per span 12.18 dB, SE = 1.29

Fig. 9b

Fig. 9c

25 repeaters, SNR per span 15.5 dB, SE = 1.55

Fig. 9d

Fig. 10

Fig. 11

EP 3 086 525 A1

Europäisches
Patentamt

European
Patent Office

Office européen
des brevets

# EUROPEAN SEARCH REPORT

Application Number

EP 15 30 5630

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 352 832 B1 (LEWIS MICHAEL E [US] ET AL) 1 April 2008 (2008-04-01)<br>* figures 5C, 5E, 5F,6 *<br>* abstract *<br>----- | 1-15 | INV.<br>H04L27/38<br>H04L25/03<br>H04B7/155 |
| X | US 2004/264591 A1 (MALM PETER [SE] ET AL) 30 December 2004 (2004-12-30)<br>* paragraphs [0005], [0011], [0051], [0052] *<br>* abstract *<br>----- | 1-15 | |

TECHNICAL FIELDS
SEARCHED      (IPC)

H04L
H04B

The present search report has been drawn up for all claims

| Place of search | Date of completion of the search | Examiner |
|---|---|---|
| Berlin | 12 October 2015 | Feng, Mei |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 5630

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2015

| Patent document cited in search report | | | Publication date | Patent family member(s) | | | Publication date |
|---|---|---|---|---|---|---|---|
| US 7352832 | | B1 | 01-04-2008 | NONE | | | |
| US 2004264591 | | A1 | 30-12-2004 | CN | 1817017 | A | 09-08-2006 |
| | | | | EP | 1647122 | A1 | 19-04-2006 |
| | | | | EP | 2453626 | A1 | 16-05-2012 |
| | | | | JP | 4546466 | B2 | 15-09-2010 |
| | | | | JP | 2007507122 | A | 22-03-2007 |
| | | | | KR | 20060029243 | A | 05-04-2006 |
| | | | | US | 2004264591 | A1 | 30-12-2004 |
| | | | | WO | 2005004430 | A1 | 13-01-2005 |

EPO FORM P0459

For more details about this annex : see Official Journal of the European Patent Office, No. 12/82